# FASCICULE DE BREVET EUROPEEN

(11) **EP 4 074 167 B1**
(45) Date de publication et mention de la délivrance du brevet: **21.01.2026**
(21) Numéro de dépôt: 22164842.1
(22) Date de dépôt: 28.03.2022
(51) Int. Cl.: A01G 9/02, A01G 23/04

(54) **DISPOSITIF POUR LA FORMATION D'UN CONTENEUR POUR VEGETAUX**
VORRICHTUNG ZUM FORMEN EINES BEHÄLTERS FÜR PFLANZEN
DEVICE FOR FORMING A CONTAINER FOR PLANTS

(30) Priorité: 14.04.2021 FR 2103829
(43) Date de publication de la demande: 19.10.2022
(73) Titulaire: Romano, Pierre, 74210 Saint Ferreol (FR); Romano, Eric, 74210 Saint Ferreol (FR); Romano, Rémy, 74210 Saint Ferreol (FR)
(72) Inventeur: Romano, Pierre, 74210 Saint Ferreol (FR); Romano, Eric, 74210 Saint Ferreol (FR); Romano, Rémy, 74210 Saint Ferreol (FR)
(74) Mandataire: Cabinet Poncet

(56) Documents cités:
- US-A- 401 193
- US-A- 5 025 590
- US-A- 5 267 664
- US-A- 636 265
- US-A- 879 613
- US-A1- 2009 038 219

## Description

### DOMAINE TECHNIQUE DE L'INVENTION

La présente invention concerne le domaine de l'agriculture, et concerne plus particulièrement le domaine de la culture des végétaux, notamment les végétaux dits « en motte » ou « en racines nues ».

De nombreux végétaux ou arbres tels que les conifères, les arbres persistants et les variétés à la reprise en racines nues délicate (Albizia, Mélia, Arbre de Judée, Acacia, etc.) ne connaissent pas de repos de végétation, même en hiver. Ils sont le plus souvent vendus « en motte » après leur arrachage, c'est-à-dire qu'une partie de la terre dans laquelle ils ont poussé est présente autour de leurs racines. En pratique, une motte de terre est découpée autour des racines et entourée d'un filet, de paille ou d'une toile de jute qui évite qu'elle ne se délite. La motte de terre permet de fournir humidité et nutriments au végétal qui ne connaît pas (ou peu) de repos végétatif.

Cette méthode permet auxdits végétaux ou arbres en motte, de limiter le traumatisme induit dans leurs racines par l'arrachage (que supportent en revanche très bien les végétaux à feuillage caduc).

Après arrachage, le végétal en motte peut être stocké pendant une durée assez importante avant d'être vendu et remis en terre. Or il présente une instabilité forte lorsqu'il est posé verticalement sur sa motte, de sorte que la motte est souvent placée dans un conteneur à parois continues en plastique pour assurer un posage stable.

Les parois du conteneur provoquent toutefois un « chignonage » des racines qui complique la reprise après replantage. En outre, l'effet du vent sur le végétal ou l'arbre peut induire un mouvement de la motte dans le conteneur conduisant à un basculement du conteneur et à un endommagement irréversible du végétal. Il faut donc consacrer un temps important à bien caler la motte dans le conteneur (à l'aide d'éléments rapportés tels que des traverses ou cales par exemple, insérées en force dans le conteneur).

Pour résoudre le problème du chignonage, le document GB 1 187 620 décrit un conteneur sensiblement tubulaire pour végétaux en motte, comportant une paroi latérale grillagée. La paroi latérale est ainsi perméable aux racines, et celles-ci n'ont alors plus tendance à former un chignon.

Un conteneur du document GB 1 187 620 présente toutefois un fort encombrement qui rend son stockage difficile. Par ailleurs, il reste nécessaire de consacrer un temps important au calage de la motte dans le conteneur.

D'autres végétaux ou arbres connaissent un repos végétatif et peuvent de ce fait être vendus « en racines nues » (pour autant que leur taille ne soit pas trop grande).

Dans tous les cas, il importe que la clientèle puisse à tout moment acquérir les végétaux et repartir immédiatement avec ceux-ci pour les replanter avec des risques amoindris d'endommagement des racines et de bonnes chances de reprise en terre.

Ainsi, il existe un besoin pour un conteneur permettant d'assurer une bonne stabilité du végétal pendant la culture du végétal (en motte, en racines nues ou autre) durant une période de temps si besoin importante, en évitant de contrarier les racines (risque de chignonage) ou d'endommager les racines (risque d'arrachage quand on enlève le conteneur avant replantage, risque de dessiccation ou de nécrose par manque d'humidité et/ou de nutriments, etc.).

Le document US 879,613 A décrit deux demi-coquilles à structure filaire indépendantes 2 et 3 pouvant être assemblées l'une à l'autre pour former un conteneur. Aucun serrage de la motte entre les deux demi-coquilles à structure filaire indépendantes n'est possible : la dimension du conteneur est définie par l'accrochage des deux demi-coquilles à structure filaire indépendantes au moyen de de leurs organes d'accrochage.

Le document US 5,025 590 A décrit un conteneur sensiblement tronconique formé par des panneaux latéraux liés de façon fixe à une base et à un bord supérieur. Des liens permettent de rapprocher les panneaux latéraux des uns des autres pour enserrer un végétal.

Le document US 5,267 664 A décrit un panier pour commissions fabriqué à partir de fils et capables de présenter une pluralité de configuration par pliage. Aux extrémités inférieures et supérieures du panier, des arches sont entrelacées de façon à procurer un pivotement simultané de toutes les arches. Aucun pivotement d'une arche n'est possible indépendamment des autres arches de l'extrémité concernée du panier.

Le document US 2009/038219 A1 décrit succinctement un procédé de conditionnement d'un végétal (voir figure 1A à 1F) dans un conteneur filaire se présentant initialement sous la forme d'un panier sensiblement tronconique.

Les documents US 401,193 A et US 636,265 A décrivent un dispositif selon le préambule de la revendication 1.

### EXPOSE DE L'INVENTION

Un problème proposé par la présente invention est de proposer un dispositif pour la formation d'un conteneur pour un végétal, qui soit facile à stocker, rapide à mettre en œuvre, et qui limite efficacement les risques de basculement du végétal et du conteneur lorsque le végétal est en attente de vente et/ou en cours de culture.

Simultanément, l'invention vise à limiter les risques que les racines soient contrariées ou endommagées.

Pour atteindre ces objets ainsi que d'autres, l'invention, selon la revendication 1, propose un dispositif pour la formation d'un conteneur pour végétaux, comprenant :
- une base s'étendant sensiblement selon un plan de base,
- une pluralité de tiges s'étendant respectivement entre une première extrémité de tige et une deuxième extrémité de tige, chaque tige comportant, au voisinage de sa deuxième extrémité, un moyen de réception de lien conformé pour sa liaison avec un lien,
dans lequel chaque tige est articulée sur la périphérie de la base selon sa première extrémité par des moyens d'articulation de façon que chaque tige (4-7) peut pivoter de façon individualisée vers et à l'écart du plan de base.

Selon l'invention, lors du stockage d'un tel dispositif, les tiges sont orientées sensiblement dans le plan de base, les tiges étant repliées sur la base ou orientées de façon à s'étendre radialement à l'écart de la base. Le dispositif est alors pratiquement plat et présente un encombrement très réduit.

Lors de l'utilisation d'un tel dispositif, les tiges sont relevées et orientées de façon sensiblement perpendiculaire pour former un conteneur ayant une paroi sensiblement tubulaire perméable aux racines, de sorte que le risque de chignonage est amoindri.

Lorsque le végétal (avec ou sans motte) est disposé sur la base, les tiges sont pivotées de façon individualisée de façon à venir chacune latéralement au plus près de la motte et/ou du système racinaire, de préférence en la serrant. La motte et/ou le système racinaire est ainsi calée de façon simple et fiable, de sorte que la stabilité du conteneur et du végétal est grandement améliorée. Aucun élément extérieur, tel qu'une traverse ou une cale en bois, n'est nécessaire.

La base présente une rigidité suffisante pour lui permettre de demeurer dans son plan de base afin de reposer de façon stable sur le sol lorsque le dispositif forme un conteneur contenant un végétal.

De préférence, pour assurer un bon calage de la motte et/ou du système racinaire, le dispositif peut comporter au moins trois tiges, que l'on peut de préférence répartir de façon sensiblement régulière selon la périphérie de la base. Il est toutefois possible de se contenter de seulement deux tiges dans le cas de végétaux de taille réduite.

Avantageusement, la base peut comprendre un élément filaire formant une boucle fermée, qui est de préférence un anneau formant une base sensiblement circulaire. La base est ainsi simple et procure un appui stable sur le sol ainsi qu'un conteneur léger.

De préférence, la base peut comprendre au moins une traverse reliant deux points de la périphérie de la base, de préférence deux points sensiblement opposés transversalement. La ou les traverses permettent simultanément de rigidifier transversalement la base et de s'opposer à un passage de la motte et/ou du système racinaire à travers la base.

Les moyens d'articulation peuvent avantageusement comporter une boucle ou un trou à la première extrémité de tige. Les moyens d'articulation ont ainsi une structure simple, efficace et peu onéreuse à fabriquer.

Les moyens de réception de lien peuvent de préférence comprendre une encoche, un trou ou une boucle. Les moyens de réception ont ainsi une structure simple, efficace et peu onéreuse à fabriquer.

Avantageusement, le dispositif peut comporter des moyens de positionnement permettant de maintenir les premières extrémités de tige en une position limitée le long de la périphérie de la base. On s'assure ainsi que les tiges gardent des positions relatives à même de procurer un bon calage de la motte et/ou du système racinaire.

De préférence, le dispositif peut être fabriqué en un matériau métallique, de préférence dépourvu de traitement anticorrosion. Un tel matériau présente une bonne dégradation dans le temps lorsqu'il est enfoui en terre, et sa dégradation peut même avantageusement supplémenter la croissance du végétal.

Avantageusement, entre les première et deuxième extrémités de tige peuvent être disposés des moyens intermédiaires de réception de lien conformés pour leur liaison avec un lien intermédiaire. On peut ainsi assurer un pressage des tiges contre la motte et/ou le système racinaire selon un tronçon intermédiaire des tiges, et ce de façon à venir enserrer la motte et/ou le système racinaire au plus près pour mieux la(le ou les) caler.

De préférence, les moyens intermédiaires de réception de lien peuvent comprendre une encoche, un trou ou une boucle. Les moyens intermédiaires de réception ont ainsi une structure simple, efficace et peu onéreuse à fabriquer.

Selon un autre aspect de la présente invention, il est proposé l'utilisation d'un dispositif tel que précédemment décrit pour la tenue d'un végétal, de préférence un arbre ou arbuste en motte ou en racines nues.

Selon encore un autre aspect de la présente invention, il est proposé un procédé de conditionnement d'un végétal comprenant les étapes suivantes :
a) disposer sur un plan de posage le dispositif tel que précédemment décrit, avec la base sensiblement parallèle au plan de posage et avec les tiges s'étendant sensiblement radialement depuis et à l'écart de la base,
b) placer la motte et/ou le système racinaire du végétal sur la base,
c) redresser les tiges à l'écart du plan de base en pivotant chaque tige de façon individualisée autour de sa première extrémité, jusqu'à venir latéralement au contact de la motte et/ou du système racinaire,
d) immobiliser, et éventuellement resserrer contre la motte et/ou le système racinaire, les tiges au moyen d'un lien engagé dans les moyens de réception de lien.

Un tel procédé est facile et rapide à mettre en œuvre, et permet un calage efficace de la motte et/ou du système racinaire par rapport au conteneur formé à l'aide du dispositif sans avoir recours à des éléments rapportés tels que des traverses ou cales en bois.

Avantageusement, lors d'une étape a1) préalable à l'étape b), on peut recouvrir la base et les tiges d'une nappe en un matériau fibreux hydrophile, tissé ou intissé, structuré de façon à être perméable aux racines dudit végétal. Une telle nappe permet d'envelopper la motte et/ou le système racinaire pour limiter son délitement tout en laissant passer les racines avec peu de (voire sans) chignonage, et permet d'absorber de l'eau pour abreuver les racines et les protéger de la chaleur.

De préférence, lors d'une étape a2) intermédiaire entre les étapes a1) et b), on peut former un lit de terreau sur la nappe. Ce lit de terreau permet un calage précaire mais suffisant de la motte et/ou du système racinaire sur la base pour assurer sa stabilité avant de redresser les tiges pour venir latéralement au contact de la motte et/ou du système racinaire.

Avantageusement, lors d'une étape intermédiaire entre les étapes a) et b), on peut redresser partiellement les tiges par pivotement autour de leur première extrémité pour conformer le dispositif sensiblement en forme de cuvette tronconique. On favorise ainsi un calage précaire mais suffisant de la motte et/ou du système racinaire sur la base pour assurer sa stabilité avant de redresser complètement les tiges pour venir latéralement au contact de la motte et/ou du système racinaire.

De préférence, lors de l'étape c), on peut redresser progressivement les tiges en ajoutant régulièrement du terreau sur les côtés de la motte et/ou du système racinaire. On supplémente ainsi la motte et/ou le système racinaire afin de lui procurer une forme relativement régulière (presque cylindrique à section transversale circulaire) afin d'accroître sa stabilité.

Pour enserrer la motte et/ou le système racinaire au plus près entre les tiges, lors d'une étape intermédiaire entre les étapes c) et d), on peut immobiliser, et éventuellement resserrer, les tiges au moyen d'un lien intermédiaire engagé dans les moyens intermédiaires de réception de lien.

Avantageusement, lors de l'étape d), on peut incliner les tiges vers le centre de la base de façon à conférer au dispositif une forme sensiblement tronconique à section transversale s'élargissant en direction de la base. Une telle forme permet de limiter le risque de présence de poches d'air latérales autour de la motte (et/ou du système racinaire) et du conteneur ainsi formé à l'aide du dispositif lorsqu'il est enfoui en terre. On favorise ainsi la prise en terre des racines, et donc la bonne reprise du végétal après replantage.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue en perspective d'un mode de réalisation particulier d'un dispositif selon la présente invention pour former un conteneur pour végétaux ;
[Fig.2] La figure 2 est une vue de côté et de détail d'une partie du dispositif de la figure 1 ;
[Fig.3] La figure 3 est une vue en perspective d'un mode de réalisation particulier d'un dispositif selon la présente invention, disposé dans une première configuration ;
[Fig.4] La figure 4 est une vue en perspective du dispositif de la figure 1 lors d'une deuxième étape d'utilisation pour le conditionnement d'un végétal en motte ;
[Fig.5] La figure 5 est une vue en perspective du dispositif de la figure 1 lors d'une troisième étape d'utilisation pour le conditionnement d'un végétal en motte ;
[Fig.6] La figure 6 est une vue en perspective du dispositif de la figure 1 lors d'une quatrième étape d'utilisation pour le conditionnement d'un végétal en motte ; et
[Fig.7] La figure 7 est une vue de côté du dispositif de la figure 1 lors d'une cinquième étape d'utilisation pour le conditionnement d'un végétal en motte.

### DESCRIPTION DES MODES DE REALISATION PREFERES

Lorsque des références numériques identiques sont utilisées dans plusieurs modes de réalisation de l'invention, ces références numériques désignent des éléments identiques ou similaires dans chacun des modes de réalisation.

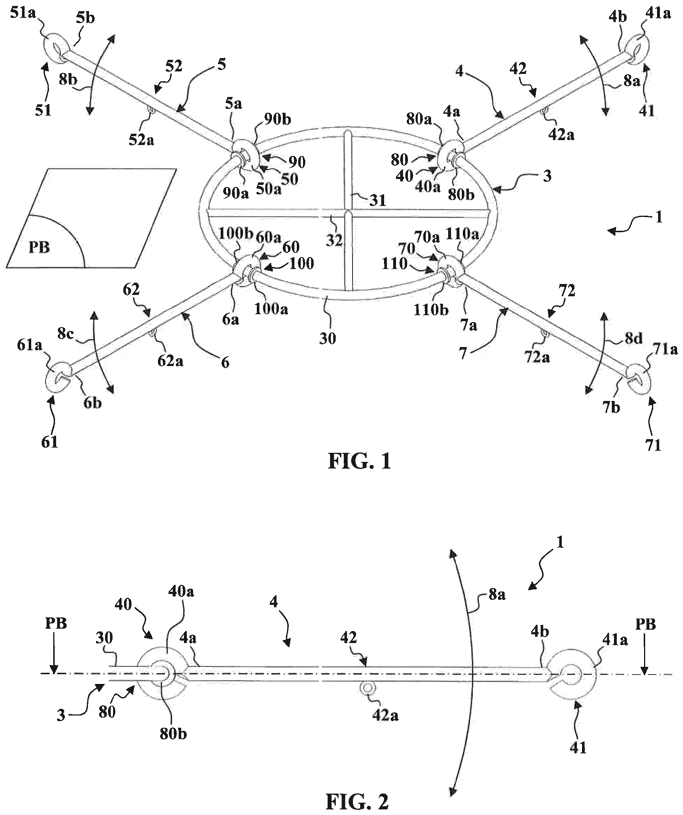

Sur les figures 1 à 7 est illustré un dispositif 1 pour la formation d'un conteneur pour végétaux 2 (ici en motte), comprenant :
- une base 3 s'étendant sensiblement selon un plan de base PB,
- une pluralité de tiges, ici quatre tiges 4 à 7, s'étendant respectivement entre une première extrémité de tige 4a à 7a et une deuxième extrémité de tige 4b à 7b.

Les quatre tiges 4 à 7 sont ici réparties régulièrement (à 90 degrés les unes des autres) sur la périphérie de la base 3. On pourrait toutefois en prévoir moins : trois tiges réparties à 120 degrés les unes des autres semble être un bon compromis pour assurer une bonne stabilité du végétal en motte 2 avec peu de tiges. Toutefois, deux tiges peuvent suffire dans le cas de végétaux 2 de taille modeste.

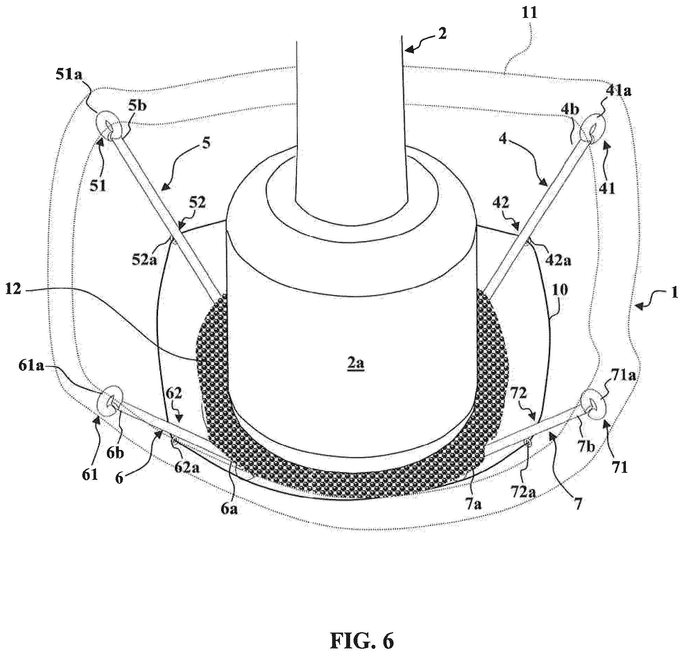

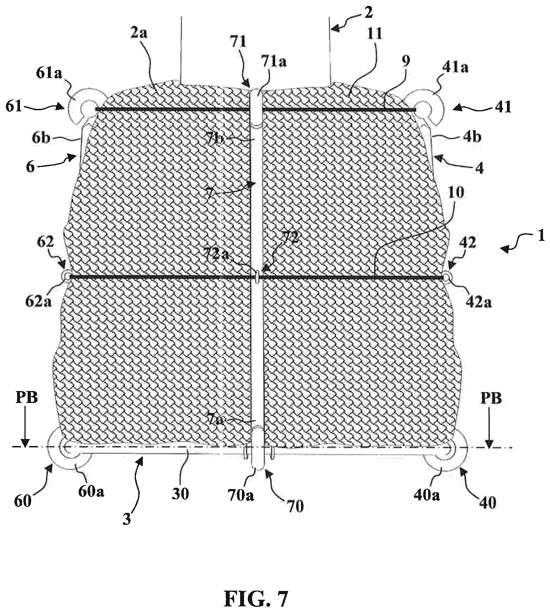

Chaque tige 4 à 7 est articulée sur la périphérie de la base 3 selon sa première extrémité 4a à 7a par des moyens d'articulation respectifs 40, 50, 60 ou 70 autorisant un pivotement individualisé (illustré par les double-flèches 8a à 8d) de ladite tige 4 à 7 vers et à l'écart du plan de base PB. Les tiges 4 à 7 peuvent ainsi être pivotées par rapport à la base pour enfermer entre elles le végétal en motte 2 (figures 6 et 7).

Chaque tige 4 à 7 comporte, au voisinage de sa deuxième extrémité 4b à 7b, un moyen de réception de lien 41, 51, 61 et 71 conformé pour sa liaison avec un lien 9 (figure 7).

La base 3 présente une rigidité suffisante pour lui permettre de demeurer dans son plan de base PB afin de reposer de façon stable sur le sol lorsque le dispositif 1 forme un conteneur contenant un végétal 2.

De façon plus précise, la base 3 comprend un élément filaire 30 formant une boucle fermée pour une bonne stabilité dans toutes les directions radiales. La base 3 est ici un anneau 30 formant une base 3 sensiblement circulaire.

Pour assurer la rigidité transversale de la base 3 et empêcher le passage du végétal en motte 2 à travers l'anneau 30, la base 3 comprend deux traverses 31 et 32 reliant chacune deux points de la périphérie de la base 3. Ici, chacune des traverses 31 et 32 relie deux points sensiblement opposés transversalement. Elles pourraient toutefois être positionnées différemment, par exemple parallèles entre elles et décalées latéralement à l'écart d'un diamètre de l'anneau 30.

Les moyens d'articulation 40, 50, 60 et 70 comportent une boucle respective 40a, 50a, 60a et 70a aux premières extrémités 4a à 7a des tiges 4 à 7. Les boucles 40a, 50a, 60a et 70a viennent entourer transversalement l'élément filaire (anneau) 30.

Si la section transversale des tiges 4 à 7 est plus importante que la section transversale de l'anneau 30, on peut prévoir des moyens d'articulation 40, 50, 60 et 70 comprenant des trous ménagés dans les premières extrémités 4a à 7a des tiges 4 à 7, et dans lesquels est engagé l'anneau 30.

Les moyens de réception de lien 41, 51, 61 et 71 comprennent également une boucle respective 41a, 51a, 61a et 71a. En alternative, les moyens de réception de lien 41, 51, 61 et 71 pourraient comprendre une encoche ou un trou.

Des moyens de positionnement 80, 90, 100 et 110 permettent de maintenir les premières extrémités de tige 4a à 7a en une position limitée le long de la périphérie de la base 3.

De façon plus spécifique, les moyens de positionnement 80, 90, 100 et 110 comportent des paires de rondelles respectives 80a-80b, 90a-90b, 100a-100b et 110a-110b rapportées et fixées sur la base 3 (par exemple par soudure sur l'anneau 30).

Les rondelles 80a, 80b, 90a, 90b, 100a, 100b, 110a et 110b ont un diamètre extérieur supérieur au diamètre intérieur des boucles 40a, 50a, 60a et 70a, de sorte qu'elles limitent une translation des tiges 4 à 7 le long de la périphérie de la base 3 (ou anneau 30). Les tiges 4 à 7 restent ainsi disposées de façon régulière en périphérie de la base 3 (ou anneau 30), à 90 degrés les unes des autres.

Le dispositif 1 est préférentiellement fabriqué entièrement en un matériau métallique, de l'acier notamment, avantageusement dépourvu de traitement anticorrosion. Le dispositif 1 peut ainsi se dégrader dans le sol après le replantage du végétal en motte 2.

Entre les première 4a à 7a et deuxième 4b à 7b extrémités des tiges 4 à 7 sont disposés des moyens intermédiaires de réception de lien 42, 52, 62 et 72 conformés pour leur liaison avec un lien intermédiaire 10 (figure 7 notamment).

De façon plus spécifique, les moyens intermédiaires de réception de lien 42, 52, 62 et 72 comprennent respectivement des anneaux 42a, 52a, 62a et 72a formant une boucle à environ mi-longueur des tiges 4 à 7. Les anneaux sont rapportés et fixés par soudure sur les tiges 4 à 7.

En alternative, les tiges 4 à 7 peuvent être mises en forme par pliage pour former une boucle à la moitié de leur longueur.

En une autre alternative, les moyens intermédiaires de réception de lien 42, 52, 62 et 72 peuvent comprendre des encoches ou des trous ménagés dans les tiges 4 à 7.

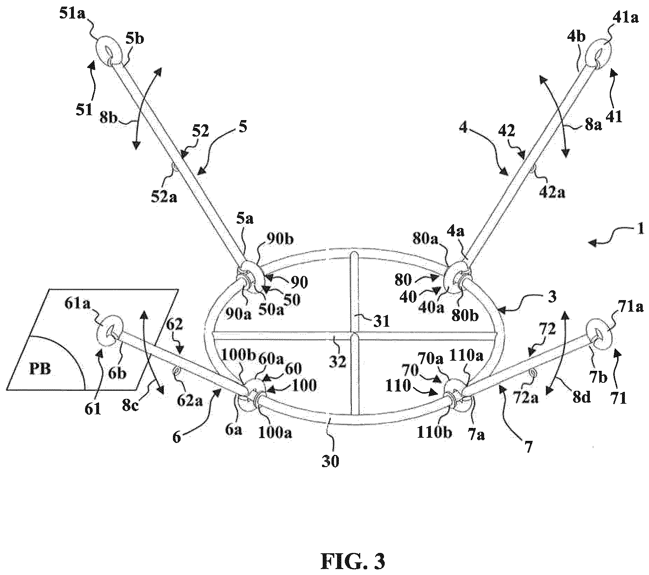

Un exemple d'utilisation du dispositif 1 pour former un conteneur pour végétaux 2 va désormais être explicité en lien avec les figures 3 à 7.

Initialement, le dispositif 1 est disposé dans la configuration illustrée sur la figure 1 (dite configuration « à plat ») pour un stockage avec un encombrement réduit. Le dispositif 1 est disposé sur un plan de posage, avec la base 3 sensiblement parallèle au plan de posage et avec les tiges 4 à 7 s'étendant sensiblement radialement depuis et à l'écart de la base 3.

Lors d'une première étape, illustrée sur la figure 3, on relève légèrement les tiges 4 à 7 à l'écart du plan de base PB par pivotement individualisé autour de leur première extrémité 4a à 7a (selon un pivotement d'environ 15 à 45 degrés par exemple).

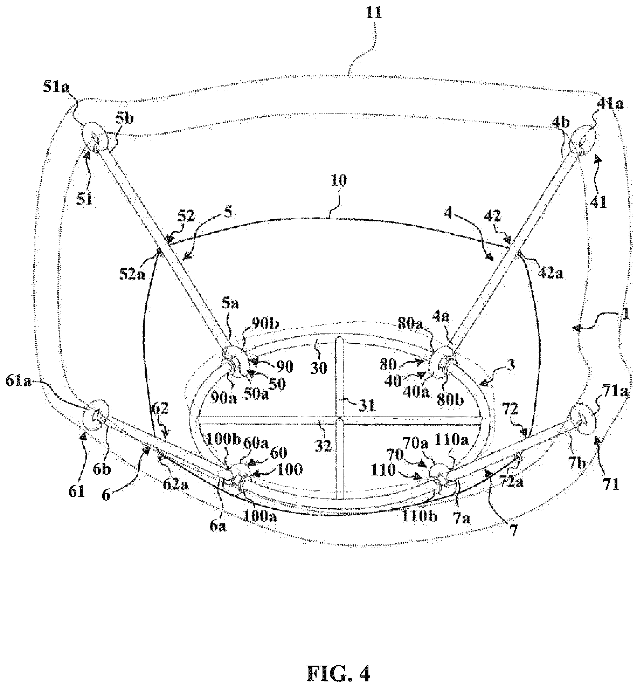

Lors d'une deuxième étape, illustrée sur la figure 4, on immobilise les tiges 4 à 7 au moyen du lien intermédiaire 10 de façon à former une sorte de cuvette tronconique. Pour ce faire, on utilise ici un lien intermédiaire 10 engagé dans les moyens intermédiaires de réception de lien 42, 52, 62 et 72. En alternative ou en complément, on peut faire usage d'un lien 9 engagé dans les moyens de réception de lien 41, 51, 61 et 71 (voir figure 7).

On recouvre alors la base 3 et les tiges 4 à 7 d'une nappe 11 (schématisée ici au moyen d'une représentation en transparence pour faciliter la compréhension du lecteur) en un matériau fibreux hydrophile, tissé ou intissé, structuré de façon à être perméable aux racines d'un végétal en motte 2.

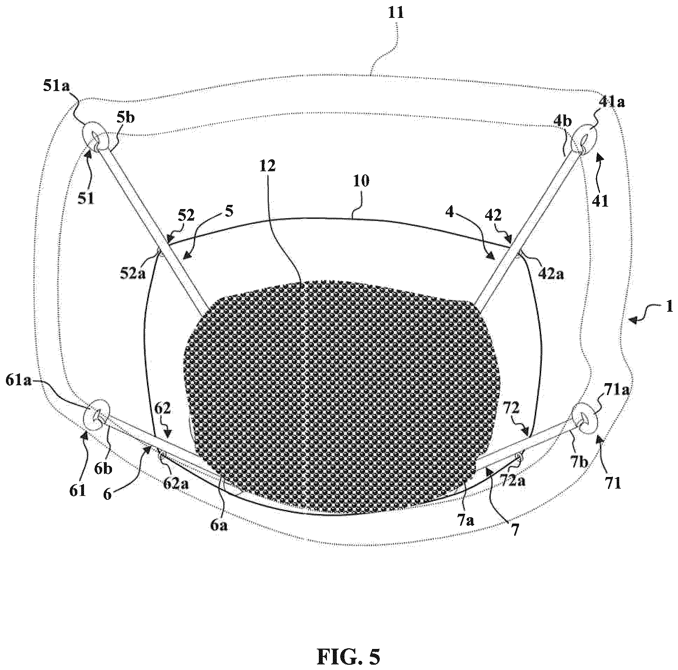

Lors d'une troisième étape, illustrée sur la figure 5, on forme un lit de terreau 12 sur la nappe 11.

Lors d'une quatrième étape, illustrée sur la figure 6, on place la motte 2a du végétal en motte 2 sur la base 3, en la posant sur le lit de terreau 12.

Lors d'une cinquième étape, on poursuit le redressement des tiges 4 à 7 à l'écart du plan de base PB par pivotement individualisé autour de leur première extrémité 4a à 7a, jusqu'à les amener latéralement au contact de la motte 2a. Simultanément, on peut ajouter régulièrement du terreau sur les côtés de la motte 2a.

Après redressement des tiges 4 à 7, on se trouve dans la configuration illustrée sur la figure 7 (sur laquelle la nappe 11 n'est plus transparente et enveloppe donc la motte 2a du végétal en motte 2).

On peut resserrer le lien intermédiaire 10 au fur et à mesure du redressement des tiges 4 à 7. En alternative, on peut provoquer le redressement des tiges 4 à 7 en resserrant le lien intermédiaire 10 (et/ou le lien 9 s'il en est déjà fait usage).

Lors d'une sixième étape, on installe le lien 9 dans les moyens de réception de lien 41, 51, 61 et 71 (ou on resserre seulement le lien 9 s'il en est déjà fait usage).

Enfin, on resserre fortement le lien 9 et le lien intermédiaire 10 pour bien plaquer les tiges 4 à 7, par pivotement individualisé, contre la motte 2a du végétal en motte 2 pour éviter tout risque de mouvement relatif entre la motte 2a du végétal en motte 2 et le conteneur formé à l'aide du dispositif 1.

De façon préférée, on resserre le lien 9 et le lien intermédiaire 10 au point d'incliner les tiges 4 à 7 vers le centre de la base 3 de façon à conférer au dispositif 1 une forme sensiblement tronconique à section transversale s'élargissant en direction de la base 3, comme mis en évidence sur la figure 3.

On peut alors stocker le végétal en motte 2 de façon sereine avant sa vente :
- les racines ne sont pas gênées par le dispositif 1 dans leur croissance, et peuvent même passer à travers la nappe 11,
- il ne se produit pas de mouvement relatif entre la motte 2a et le conteneur formé à l'aide du dispositif 1 qui repose de façon stable sur un plan de posage (le sol généralement), ce qui limite les risques de basculement.

En d'autres termes et de façon synthétique, le conditionnement du végétal en motte 2 au moyen du dispositif 1 comprend les étapes majeures suivantes :
a) disposer sur un plan de posage le dispositif 1, avec la base 3 sensiblement parallèle au plan de posage et avec les tiges 4 à 7 s'étendant sensiblement radialement depuis et à l'écart de la base 3,
b) placer la motte 2a du végétal en motte 2 sur la base 3,
c) redresser les tiges 4 à 7 à l'écart du plan de base PB par pivotement autour de leur première extrémité 4a à 7a, en venant latéralement au contact de la motte 2a,
d) immobiliser, et éventuellement resserrer contre la motte 2a, les tiges 4 à 7 au moyen d'un lien 9 engagé dans les moyens de réception de lien 41, 51, 61 et 71.

Après stockage et vente du végétal en motte 2, celui-ci peut être à tout moment replanté en terre avec ou sans le dispositif 1 (et la nappe 11).

Lorsque le végétal en motte 2 est replanté sans le dispositif 1, ce dernier peut être réutilisé pour un autre végétal en motte 2. Le retrait du dispositif 1 présente un risque très limité de traumatisme pour les racines.

Mais de préférence le végétal en motte 2 est replanté en terre avec le dispositif 1 et la nappe 11, lesquels vont se dégrader dans le sol au fur et à mesure du temps. Pour les mêmes raisons d'aptitude à se dégrader en terre, le lien 9 et le lien intermédiaire 10 peuvent de préférence consister en de simples fils de fer (dépourvus de gaine extérieure pour favoriser leur oxydation).

Le fait de replanter le végétal en motte 2 avec le dispositif 1 permet, outre le fait d'assurer sa stabilité lors des opérations de replantage, de conserver à la motte 2a lors de sa mise en terre une forme sensiblement tronconique qui limite la présence de poches d'air en périphérie de la motte 2a lorsque la motte 2a est recouverte de terre. Les racines ont ainsi plus de facilité pour reprendre et poursuivre leur croissance en périphérie de la motte 2a. La reprise en terre du végétal en motte 2 est ainsi favorisée.

Bien que la présente invention ait été explicitée sur les figures pour le conditionnement, le stockage et la culture d'un végétal en motte 2, l'invention est applicable de façon identique à un végétal 2 en racines nues.

L'invention est aussi applicable à tout autre végétal devant être mis en culture pour être vendu et replanté à tout moment.

La présente invention n'est pas limitée aux modes de réalisation qui ont été explicitement décrits, mais elle en inclut les diverses variantes et généralisations contenues dans le domaine des revendications ci-après.

## Revendications

1. Dispositif (1) pour la formation d'un conteneur pour végétaux (2), comprenant :
- une base (3) s'étendant sensiblement selon un plan de base (PB),
- une pluralité de tiges (4-7) s'étendant respectivement entre une première extrémité de tige (4a-7a) et une deuxième extrémité de tige (4b-7b), chaque tige (4-7) comportant, au voisinage de sa deuxième extrémité (4b-7b), un moyen de réception de lien (41, 51, 61, 71) conformé pour sa liaison avec un lien (9), dans lequel chaque tige (4-7) est articulée sur la périphérie de la base (3) selon sa première extrémité (4a-7a) par des moyens d'articulation (40, 50, 60, 70) de façon que chaque tige (4-7) peut pivoter de façon individualisée vers et à l'écart du plan de base (PB),
**caractérisé en ce que**, dans une configuration de stockage, les tiges (4-7) sont disposées sensiblement dans le plan de base (PB) en s'étendant radialement depuis et à l'écart de la base (3).

2. Dispositif (1) selon la revendication 1, **caractérisé en ce qu'**il comporte au moins trois tiges (4-7), que l'on peut de préférence répartir de façon sensiblement régulière selon la périphérie de la base (3).

3. Dispositif (1) selon l'une des revendications 1 ou 2, **caractérisé en ce que** la base (3) comprend un élément filaire (30) formant une boucle fermée, qui est de préférence un anneau (30) formant une base (3) sensiblement circulaire.

4. Dispositif (1) selon l'une quelconque des revendications 1 à 3, **caractérisé en ce que** la base (3) comprend au moins une traverse (31, 32) reliant deux points de la périphérie de la base (3), de préférence deux points sensiblement opposés transversalement.

5. Dispositif (1) selon l'une quelconque des revendications 1 à 4, **caractérisé en ce que** les moyens d'articulation (40, 50, 60, 70) comportent une boucle (40a, 50a, 60a, 70a) ou un trou à la première extrémité de tige (4a-7a).

6. Dispositif (1) selon l'une quelconque des revendications 1 à 5, **caractérisé en ce que** les moyens de réception de lien (41, 51, 61, 71) comprennent une encoche, un trou ou une boucle (41a, 51a, 61a, 71a).

7. Dispositif (1) selon l'une quelconque des revendications 1 à 6, **caractérisé en ce qu'**il comporte des moyens de positionnement (80, 90, 100, 110) permettant de maintenir les premières extrémités de tige (4a-7a) en une position limitée le long de la périphérie de la base (3).

8. Dispositif (1) selon l'une quelconque des revendications 1 à 7, **caractérisé en ce qu'**il est fabriqué en un matériau métallique, de préférence dépourvu de traitement anticorrosion.

9. Dispositif (1) selon l'une quelconque des revendications 1 à 8, **caractérisé en ce que**, entre les première (4a-7a) et deuxième (4b-7b) extrémités de tige, sont disposés des moyens intermédiaires de réception de lien (42, 52, 62, 72) conformés pour leur liaison avec un lien intermédiaire (10).

10. Dispositif (1) selon la revendication 9, **caractérisé en ce que** les moyens intermédiaires de réception de lien (42, 52, 62, 72) comprennent une encoche, un trou ou une boucle (42a, 52a, 62a, 72a).

11. Utilisation d'un dispositif (1) selon l'une quelconque des revendications 1 à 10, pour la tenue d'un végétal (2), de préférence un arbre ou arbuste en motte ou en racines nues.

12. Procédé de conditionnement d'un végétal (2) comprenant les étapes suivantes :
a) disposer sur un plan de posage le dispositif (1) selon l'une quelconque des revendications 1 à 10, avec la base (3) sensiblement parallèle au plan de posage et avec les tiges (4-7) s'étendant sensiblement radialement depuis et à l'écart de la base (3),
b) placer la motte (2a) et/ou le système racinaire du végétal (2) sur la base (3),
c) redresser les tiges (4-7) à l'écart du plan de base (PB) en pivotant chaque tige (4-7) de façon individualisée autour de sa première extrémité (4a-7a) jusqu'à venir latéralement au contact de la motte (2a) et/ou du système racinaire,
d) immobiliser, et éventuellement resserrer contre la motte (2a) et/ou le système racinaire, les tiges (4-7) au moyen d'un lien (9) engagé dans les moyens de réception de lien (41, 51, 61, 71).

13. Procédé selon la revendication 12, **caractérisé en ce que**, lors d'une étape a1) préalable à l'étape b), on recouvre la base (3) et les tiges (4-7) d'une nappe (11) en un matériau fibreux hydrophile, tissé ou intissé, structuré de façon à être perméable aux racines dudit végétal (2).

14. Procédé selon la revendication 13, **caractérisé en ce que**, lors d'une étape a2) intermédiaire entre les étapes a1) et b), on forme un lit de terreau (12) sur la nappe (11).

15. Procédé selon l'une quelconque des revendications 12 à 14, **caractérisé en ce que**, lors d'une étape intermédiaire entre les étapes a) et b), on redresse partiellement les tiges (4-7) par pivotement autour de leur première extrémité (4a-7a) pour conformer le dispositif (1) sensiblement en forme de cuvette tronconique.

16. Procédé selon l'une quelconque des revendications 12 à 15, **caractérisé en ce que**, lors de l'étape c), on redresse progressivement les tiges (4-7) en ajoutant régulièrement du terreau sur les côtés de la motte (2a) et/ou du système racinaire.

17. Procédé selon l'une quelconque des revendications 12 à 16, prises dans leur rattachement aux revendications 9 ou 10, **caractérisé en ce que**, lors d'une étape intermédiaire entre les étapes c) et d), on immobilise, et éventuellement resserre, les tiges (4-7) au moyen d'un lien intermédiaire (10) engagé dans les moyens intermédiaires de réception de lien (42, 52, 62, 72).

18. Procédé selon l'une quelconque des revendications 12 à 17, **caractérisé en ce que**, lors de l'étape d), on incline les tiges (4-7) vers le centre de la base (3) de façon à conférer au dispositif (1) une forme sensiblement tronconique à section transversale s'élargissant en direction de la base (3).

## Patentansprüche

1. Vorrichtung (1) zur Herstellung eines Pflanzenbehälters (2),
umfassend:
- eine Basis (3), die sich im Wesentlichen entlang einer Basisebene (PB) erstreckt,
- eine Vielzahl von Stäben (4 bis 7), die sich jeweils zwischen einem ersten Stabende (4a bis 7a) und einem zweiten Stabende (4b bis 7b) erstrecken, wobei jeder Stab (4 bis 7) in der Nähe seines zweiten Endes (4b bis 7b) Verbindungsaufnahmemittel (41, 51, 61, 71) aufweist, die zu dessen Verbindung mit einem Verbindungselement (9) ausgebildet sind, wobei jeder Stab (4 bis 7) an seinem ersten Ende (4a bis 7a) durch Gelenkmittel (40, 50, 60, 70) an dem Umfang der Basis (3) an ihrem ersten Ende (4a bis 7a) angelenkt ist, sodass jeder Stab (4 bis 7) einzeln zur Basisebene (PB) hin und von dieser weg schwenkbar,
**dadurch gekennzeichnet, dass** in einer Lagerkonfiguration die Stäbe (4 bis 7) im Wesentlichen in der Basisebene (PB) angeordnet sind und sich radial von der Basis (3) weg erstrecken.

2. Vorrichtung (1) nach Anspruch 1, **dadurch gekennzeichnet, dass** sie mindestens drei Stäbe (4 bis 7) aufweist, die vorzugsweise im Wesentlichen gleichmäßig über den Umfang der Basis (3) verteilt werden können.

3. Vorrichtung (1) nach einem der Ansprüche 1 oder 2, **dadurch gekennzeichnet, dass** die Basis (3) ein Drahtelement (30) umfasst, das eine geschlossene Schleife bildet, die vorzugsweise ein Ring (30) ist, der eine im Wesentlichen kreisförmige Basis (3) bildet.

4. Vorrichtung (1) nach einem der Ansprüche 1 bis 3, **dadurch gekennzeichnet, dass** die Basis (3) mindestens einen Quersteg (31, 32) umfasst, der zwei Punkte an dem Rand der Basis (3) verbindet, vorzugsweise zwei Punkte, die sich quer gegenüberliegen.

5. Vorrichtung (1) nach einem der Ansprüche 1 bis 4, **dadurch gekennzeichnet, dass** die Gelenkmittel (40, 50, 60, 70) eine Öse (40a, 50a, 60a, 70a) oder ein Loch am ersten Ende des Stabes (4a bis 7a) aufweisen.

6. Vorrichtung (1) nach einem der Ansprüche 1 bis 5, **dadurch gekennzeichnet, dass** die Verbindungsaufnahmemittel (41, 51, 61, 71) eine Kerbe, ein Loch oder eine Schlaufe (41a, 51a, 61a, 71a) aufweisen.

7. Vorrichtung (1) nach einem der Ansprüche 1 bis 6, **dadurch gekennzeichnet, dass** sie Positionierungsmittel (80, 90, 100, 110) aufweist, die es ermöglichen, die ersten Stabenden (4a bis 7a) in einer begrenzten Position entlang des Umfangs der Basis (3) zu halten.

8. Vorrichtung (1) nach einem der Ansprüche 1 bis 7, **dadurch gekennzeichnet, dass** sie aus einem metallischen Material hergestellt ist, vorzugsweise ohne Korrosionsschutzbehandlung.

9. Vorrichtung (1) nach einem der Ansprüche 1 bis 8, **dadurch gekennzeichnet, dass** zwischen dem ersten (4a bis 7a) und dem zweiten (4b bis 7b) Stabende Zwischenverbindungsaufnahmemittel (42, 52, 62, 72) angeordnet sind, die zu dessen Verbindung mit einem Zwischenverbindungselement (10) ausgebildet sind.

10. Vorrichtung (1) nach Anspruch 9, **dadurch gekennzeichnet, dass** Zwischenverbindungsaufnahmemittel (42, 52, 62, 72) eine Kerbe, ein Loch oder eine Schlaufe (42a, 52a, 62a, 72a) umfassen.

11. Verwendung einer Vorrichtung (1) nach einem der Ansprüche 1 bis 10 zum Halten einer Pflanze (2), vorzugsweise eines Baumes oder Strauchs mit Wurzelballen oder nackten Wurzeln.

12. Verfahren zur Aufbereitung einer Pflanze (2), das die folgenden Schritte umfasst:
a) Aufstellen der Vorrichtung (1) nach einem der Ansprüche 1 bis 10 auf einer Auflagefläche, wobei die Basis (3) im Wesentlichen parallel zu der Auflagefläche ist und die Stäbe (4 bis 7) im Wesentlichen radial von der Basis (3) weg und von dieser entfernt verlaufen,
b) Platzieren des Wurzelballens (2a) und/oder das Wurzelsystem der Pflanze (2) auf der Basis (3),
c) Wegrichten der Stäbe (4 bis 7) von der Basisebene (PB) weg, indem jeder Stab (4 bis 7) einzeln um sein erstes Ende (4a bis 7a) gedreht wird, bis er seitlich mit dem Wurzelballen (2a) und/oder dem Wurzelsystem in Kontakt kommt,
d) Fixieren und gegebenenfalls Festziehen der Stäbe (4 bis 7) gegen den Wurzelballen (2a) und/oder das Wurzelsystem mittels eines Verbindungselements (9), das in die Verbindungsaufnahmemittel (41, 51, 61, 71) eingreift.

13. Verfahren nach Anspruch 12, **dadurch gekennzeichnet, dass** in einem Schritt a1) vor Schritt b) die Basis (3) und die Stäbe (4 bis 7) mit einer Bahn (11) aus einem hydrophilen, gewebten oder nicht gewebten Fasermaterial bedeckt werden, das so strukturiert ist, dass es für die Wurzeln der Pflanze (2) durchlässig ist.

14. Verfahren nach Anspruch 13, **dadurch gekennzeichnet, dass** in einem Zwischenschritt a2) zwischen den Schritten a1) und b) auf der Folie (11) ein Kompostbett (12) gebildet wird.

15. Verfahren nach einem der Ansprüche 12 bis 14, **dadurch gekennzeichnet, dass** in einem Zwischenschritt zwischen den Schritten a) und b) die Stäbe (4 bis 7) durch Schwenken um ihr erstes Ende (4a bis 7a) teilweise aufgerichtet werden, um die Vorrichtung (1) im Wesentlichen in die Form einer kegelstumpfförmigen Schale zu bringen.

16. Verfahren nach einem der Ansprüche 12 bis 15, **dadurch gekennzeichnet, dass** in Schritt c) die Stäbe (4 bis 7) durch regelmäßiges Hinzufügen von Erde an den Seiten des Wurzelballens (2a) und/oder des Wurzelsystems schrittweise aufgerichtet werden.

17. Verfahren nach einem der Ansprüche 12 bis 16 in Verbindung mit den Ansprüchen 9 oder 10, **dadurch gekennzeichnet, dass** in einem Zwischenschritt zwischen den Schritten c) und d) die Stäbe (4 bis 7) mit einem Zwischenverbindungselement (10) fixiert und gegebenenfalls festgezogen werden, das in die Zwischenverbindungsaufnahmemittel (42, 52, 62, 72) eingreift.

18. Verfahren nach einem der Ansprüche 12 bis 17, **dadurch gekennzeichnet, dass** in Schritt d) die Stäbe (4 bis 7) zur Mitte der Basis (3) hin geneigt werden, um der Vorrichtung (1) eine im Wesentlichen kegelstumpfförmige Form mit einem sich zur Basis (3) hin erweiternden Querschnitt zu verleihen.

## Claims

1. A device (1) for forming a plant container (2), comprising:
- a base (3) extending substantially along a base plane (PB),
- a plurality of rods (4-7) extending respectively between a first rod end (4a-7a) and a second rod end (4b-7b), each rod (4-7) having, adjacent its second end (4b-7b), a tie-receiving means (41, 51, 61, 71) shaped for connection to a tie (9),
wherein each rod (4-7) is hinged to the periphery of the base (3) along its first end (4a-7a) by hinge means (40, 50, 60, 70) so that each rod (4-7) may pivot individually towards and away from the base plane (PB),
**characterized in that**, in a storage configuration, the rods (4-7) are arranged substantially in the base plane (PB) extending radially from and away from the base (3).

2. The device (1) according to claim 1, **characterized in that** it comprises at least three rods (4-7), which may preferably be distributed substantially evenly about the periphery of the base (3).

3. The device (1) according to any one of claims 1 or 2, **characterized in that** the base (3) comprises a wire element (30) forming a closed loop, which is preferably a ring (30) forming a substantially circular base (3).

4. The device (1) according to any one of claims 1 to 3, **characterized in that** the base (3) comprises at least one crosspiece (31, 32) connecting two points on the periphery of the base (3), preferably two points substantially opposite each other transversely.

5. The device (1) according to any one of claims 1 to 4, **characterized in that** the hinge means (40, 50, 60, 70) comprise a loop (40a, 50a, 60a, 70a) or a hole at the first rod end (4a-7a).

6. The device (1) according to any one of claims 1 to 5, **characterized in that** the tie-receiving means (41, 51, 61, 71) comprise a notch, a hole or a loop (41a, 51a, 61a, 71a).

7. The device (1) according to any one of claims 1 to 6, **characterized in that** it comprises positioning means (80, 90, 100, 110) for holding the first rod ends (4a-7a) in a limited position along the periphery of the base (3).

8. The device (1) according to any one of claims 1 to 7, **characterized in that** it is made of a metallic material, preferably without anticorrosion treatment.

9. The device (1) according to any one of claims 1 to 8, **characterized in that**, between the first (4a-7a) and second (4b-7b) rod ends, intermediate tie-receiving means (42, 52, 62, 72) are arranged which are designed for connection to an intermediate tie (10).

10. The device (1) according to claim 9, **characterized in that** the intermediate tie-receiving means (42, 52, 62, 72) comprise a notch, a hole or a loop (42a, 52a, 62a, 72a).

11. A use of a device (1) according to any one of claims 1 to 10, for holding a plant (2), preferably a tree or shrub with a root ball or bare roots.

12. A packaging method of a plant (2) comprising the following steps:
a) arranging the device (1) according to any one of claims 1 to 10 on a laying plane, with the base (3) substantially parallel to the laying plane and with the rods (4-7) extending substantially radially from and away from the base (3),
b) placing the root ball (2a) and/or the plant root system (2) on the base (3),
c) straightening the rods (4-7) away from the base plane (PB) by pivoting each rod (4-7) individually around its first end (4a-7a) until it comes into lateral contact with the root ball (2a) and/or root system,
d) immobilizing, and possibly tightening against the root ball (2a) and/or the root system, the rods (4-7) by means of a tie (9) engaged in the tie-receiving means (41, 51, 61, 71).

13. The method according to claim 12, **characterized in that**, in a step a1) prior to step b), the base (3) and rods (4-7) are covered with a web (11) of hydrophilic fibrous material, woven or non-woven, structured so as to be permeable to the roots of said plant (2).

14. The method according to claim 13, **characterized in that**, in a step a2) intermediate between steps a1) and b), a bed of compost (12) is formed on the web (11).

15. The method according to any one of claims 12 to 14, **characterized in that**, in an intermediate step between steps a) and b), the rods (4-7) are partially straightened by pivoting about their first end (4a-7a) to shape the device (1) substantially into a truncated cone shape.

16. The method according to any one of claims 12 to 15, **characterized in that**, during step c), the rods (4-7) are progressively straightened by regularly adding potting soil to the sides of the root ball (2a) and/or root system.

17. The method according to any one of claims 12 to 16, in conjunction with claims 9 or 10, **characterized in that**, during an intermediate step between steps c) and d), the rods (4-7) are immobilized, and optionally tightened, by means of an intermediate tie (10) engaged in the intermediate tie-receiving means (42, 52, 62, 72).

18. The method according to any one of claims 12 to 17, **characterized in that**, in step d), the rods (4-7) are inclined towards the center of the base (3) so as to give the device (1) a substantially frustoconical shape with a cross-section widening towards the base (3).
